# FASCICULE DE BREVET EUROPEEN

(11) **EP 2 027 658 B1**
(45) Date de publication et mention de la délivrance du brevet: **28.12.2011**
(21) Numéro de dépôt: 07731458.1
(22) Date de dépôt: 15.05.2007
(51) Int. Cl.: H04B 5/02

(54) **DISPOSITIF SANS CONTACT RADIOFREQUENCE COMPORTANT PLUSIEURS ANTENNES ET CIRCUIT DE SELECTION D'ANTENNES ASSOCIE**
EINRICHTUNG OHNE HOCHFREQUENZKONTAKT MIT MEHREREN ANTENNEN UND DIESBEZÜGLICHE ANTENNENAUSWAHLSCHALTUNG
DEVICE WITH NO RADIOFREQUENCY CONTACT COMPRISING SEVERAL ANTENNAS AND ASSOCIATED ANTENNA SELECTION CIRCUIT

(30) Priorité: 16.05.2006 FR 0604363; 16.05.2006 FR 0604365
(43) Date de publication de la demande: 25.02.2009
(73) Titulaire: ASK S.A., 06560 Valbonne (FR)
(72) Inventeur: KAYANAKIS, Georges, F-06600 Antibes (FR); GRASSET, Yannick, F-06220 Vallauris (FR); SABBAH, Elias, F-06560 Valbonne (FR)
(86) Numéro de dépôt international: PCT/FR2007/000820
(87) Numéro de publication internationale: WO 2007/132094

(56) Documents cités:
- EP-A- 0 704 928
- US-A- 6 127 799
- US-A1- 2005 104 553

## Description

### Domaine technique

La présente invention concerne les dispositifs radiofréquences (RFID) et concerne en particulier les dispositifs sans contact radiofréquence comportant plusieurs antennes et leur circuit de sélection d'antenne associé.

### Etat de la technique

Les dispositifs d'émission et de réception sans contact sont largement utilisés de nos jours dans de nombreuses applications. Une de ces applications est la carte à puce sans contact qui est un système de plus en plus utilisé dans différents secteurs, comme par exemple le secteur des transports publics. Elles ont aussi été développées comme moyen de paiement.

L'échange d'informations entre un dispositif sans contact et le lecteur associé s'effectue par transmission de signaux électromagnétiques à distance entre une antenne logée dans le dispositif sans contact et une deuxième antenne située dans le lecteur. Pour élaborer, stocker et traiter les informations, le dispositif est muni d'un microcircuit connecté à l'antenne et comportant une zone mémoire. Lors de l'échange d'informations, l'alimentation du dispositif sans contact est assurée par les ondes électromagnétiques transmises par le lecteur.

Une application de ces dispositifs sans contact qui prend de plus en plus d'importance est leur utilisation comme étiquettes apposées sur des objets pour leur identification dans le suivi de marchandises ou l'état de stocks. Dans ces applications, le microcircuit de l'étiquette apposée sur chaque objet contient en mémoire les données de l'objet qui permettent de répertorier et d'identifier l'objet et d'assurer ainsi sa traçabilité.

L'étiquette est apposée sur l'objet au moment de son élaboration et l'accompagne jusqu'à sa réception par le client. La mémoire du microcircuit contient les informations concernant les caractéristiques de l'objet ou son contenu s'il s'agit d'un conteneur. Ces informations peuvent à tout moment être lues par un lecteur. Actuellement, les fréquences couramment utilisées par le lecteur pour l'échange de données avec l'étiquette sont des ultra hautes fréquences (UHF) de 860 MHz à 960 MHz qui permettent de lire l'étiquette à une distance dépassant 2 mètres.

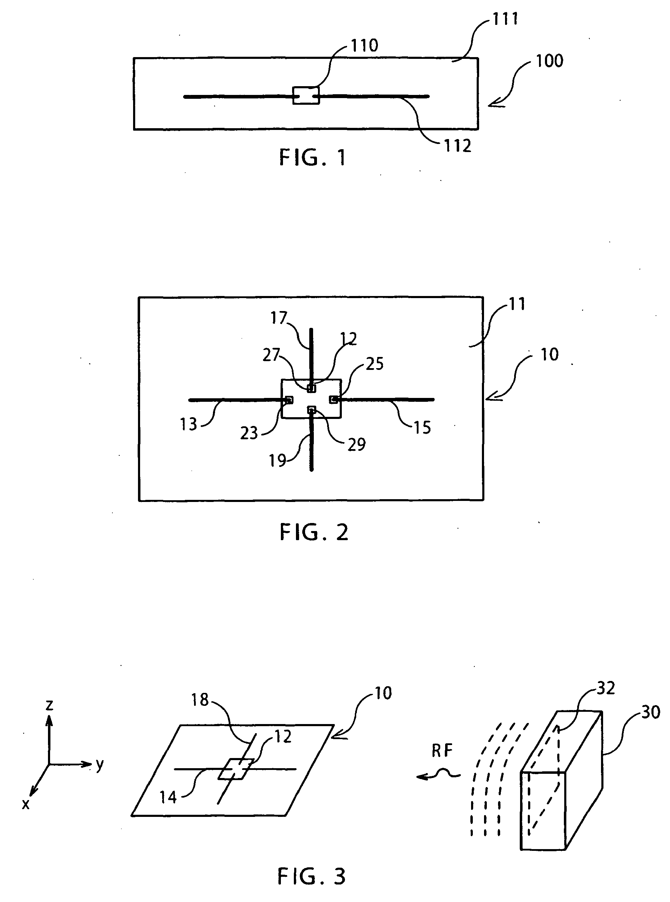

Une antenne simple pouvant être utilisée dans les étiquettes sans contact dites étiquettes RFID 100 telles que représentées sur la figure 1 est l'antenne dipôle 112 dont la dimension est approximativement une demi-longueur d'onde pour la fréquence d'utilisation. La particularité d'un tel dipôle réside dans le fait que l'énergie est rayonnée principalement dans une direction préférentielle perpendiculaire à l'axe du dipôle. Par conséquent, un simple dipôle utilisé comme antenne présente l'inconvénient majeur d'avoir un rayonnement directif, ce qui implique que l'étiquette n'est pas fonctionnelle dans toutes les directions mais uniquement selon certaines directions privilégiées.

Une solution pour pallier cet inconvénient est d'utiliser une combinaison d'antennes, par exemple deux dipôles tel que représenté sur la figure 2, afin de se rapprocher d'un rayonnement volumique uniforme ou non directionnel. Dans ce cas, les signaux captés par chaque antenne peuvent être additionnés entre eux afin d'obtenir un signal en sortie plus important. Un premier inconvénient d'un tel système à plusieurs antennes réside dans le fait que la puissance du champ reçu n'est pas optimisée lorsqu'un des signaux capté est du bruit. De plus, chaque signal capté est régulé par une capacité, ce qui nécessite de la place sur le circuit intégré. Or la taille très réduite de tels circuits implique un surcoût lorsqu'il s'agit d'y rajouter des composants.

### Exposé de l'invention

C'est pourquoi le but de l'invention est de fournir un circuit intégré pour dispositif sans contact radiofréquence permettant la gestion des signaux en provenance de plusieurs antennes afin d'améliorer le rayonnement du dispositif sans contact.

Un autre but de l'invention est de fournir un dispositif sans contact radiofréquence muni d'un circuit intégré permettant la gestion des signaux en provenance de plusieurs antennes afin d'améliorer le rayonnement.

L'objet de l'invention est donc un Circuit intégré pour dispositif sans contact radiofréquence connecté à une première antenne et à une seconde antenne destinées à recevoir un signal radiofréquence en provenance d'un lecteur. Selon une caractéristique principale, le circuit intégré comprend un premier circuit redresseur et un second circuit redresseur pour redresser chaque signal radiofréquence reçu respectivement de la première antenne et de la seconde antenne, de façon à produire deux tensions de sortie positives V1 et V2, les circuits redresseur étant montés en parallèle de façon à sélectionner une valeur de tension de sortie qui correspond à la valeur de tension maximale entre V1 et V2.

Un second objet de l'invention est un dispositif sans contact radiofréquence muni d'un circuit intégré selon le premier objet.

### Description brève des figures

Les buts, objets et caractéristiques de l'invention apparaîtront plus clairement à la lecture de la description qui suit faite en référence aux dessins dans lesquels :
La figure 1 représente une étiquette à une antenne RFID munie de type dipôle,
La figure 2 représente une étiquette à deux antennes,
La figure 3 est une représentation schématique de la communication entre l'étiquette RFID et un lecteur.
La figure 6 représente le schéma électrique des systèmes de réception radiofréquence du circuit intégré selon l'invention,
La figure 7 représente le schéma électrique des systèmes de réception radiofréquence du circuit intégré selon l'invention selon un exemple particulier,
La figure 8 représente une première étiquette selon un premier mode de réalisation de l'invention,
La figure 9 représente une seconde étiquette selon le premier mode de réalisation de l'invention,
La figure 10 est une vue de l'étiquette selon l'invention positionnée sur deux faces d'un objet volumique,
La figure 11 est une vue de l'étiquette selon l'invention avant d'être positionnée sur trois faces d'un objet volumique selon une première façon,
La figure 12 est une vue de l'étiquette selon l'invention positionnée sur trois faces d'un objet volumique selon une première façon.

### Description détaillée de l'invention

Selon un mode de réalisation préféré de l'invention, le dispositif sans contact radiofréquence est une étiquette d'identification radiofréquence (RFID) illustrée sur les figures 2 et 3 constituée d'un support 10 sur lequel est disposé un circuit intégré 12 connecté à deux antennes 14 et 18. Le support 11 est un support de préférence en matériau souple tel qu'un matériau fibreux comme du papier ou synthétique. Chaque antenne est une antenne du type dipôle constituée de deux brins. La première antenne 14 est constituée des brins 13 et 15 et la seconde antenne 18 est constituée des brins 17 et 19. Les antennes 14 et 18 de l'étiquette 10 sont imprimées sur le support 11 par impression de type sérigraphie, flexographie, héliogravure, offset ou jet d'encre. L'antenne est réalisée à partir d'encre conductrice de type encre époxy chargée de particules d'argent ou d'or ou à partir d'un polymère conducteur. Les antennes 14 et 18 sont de préférence des antennes dipôles dont la dimension est approximativement une demi-longueur d'onde pour la fréquence d'utilisation. Chaque antenne est connectée au circuit intégré par l'intermédiaire de plots de connexion 23, 25, 27 et 29 de la puce, Les brins 13 et 15 de l'antenne 14 étant reliés aux plots 23 et 25 du circuit intégré et les brins 17 et 19 de l'antenne 18 étant reliés aux plots 27 et 29 du circuit intégré. Les plots 23 et 25 du circuit intégré sont reliés à un premier système de réception tandis que les plots 27 et 29 sont reliés à un second système de réception. Le circuit intégré comporte une zone mémoire contenant par exemple les informations nécessaires à la traçabilité d'un objet ou à l'identification d'une personne, les informations pouvant être lues à partir d'un lecteur par échange d'ondes électromagnétiques à ultra haute fréquence (UHF) de l'ordre du GHz et en particulier supérieure à 860 MHz (fréquence de 1 GHz selon la norme ISO 18000-6 et fréquence de 2,45 GHz selon la norme ISO 18000-4).

Lors de l'échange d'informations, l'alimentation du circuit intégré est assurée par les ondes électromagnétiques transmises par le lecteur. Lorsque l'étiquette RFID rentre dans le champ d'un lecteur, une tension est induite sur chaque antenne. Cette tension UHF est alors traitée de façon à générer une tension positive et continue destinée à l'alimentation du circuit d'une part et une tension positive ayant une vitesse de variation adaptée pour permettre la démodulation de l'information transmise par le lecteur d'autre part. Quand il s'agit de générer l'alimentation du circuit, on parle donc de redresseur tandis que quand il s'agit de récupérer l'information modulée en amplitude on parle d'une détection d'enveloppe. Sachant que le traitement du premier signal d'alimentation et du second signal correspondant à l'information modulée sont similaire, nous allons donc décrire en détail le traitement du signal destiné à l'alimentation du circuit sachant qu'une description similaire est applicable au signal modulé représentant l'information. Les différences seront cependant mentionnées. La valeur pic de la tension induite dans chaque antenne dépend de la position de l'antenne donc de l'orientation de l'étiquette par rapport à l'orientation de l'antenne du lecteur. Par exemple, dans le cas illustré sur la figure 3, l'étiquette est positionnée par rapport au champ Radio fréquence (RF) émis par l'antenne 32 du lecteur 30 de façon à ce que la tension induite dans l'antenne 14 soit inférieure à la tension induite dans l'antenne 18. En effet, le rayonnement d'une antenne dipôle est très faible dans l'axe de l'antenne, c'est-à-dire en référence à la figure 3 le long de l'axe y, et maximum dans le plan perpendiculaire à l'antenne, c'est-à-dire dans le plan (x, z) et passant par son milieu.

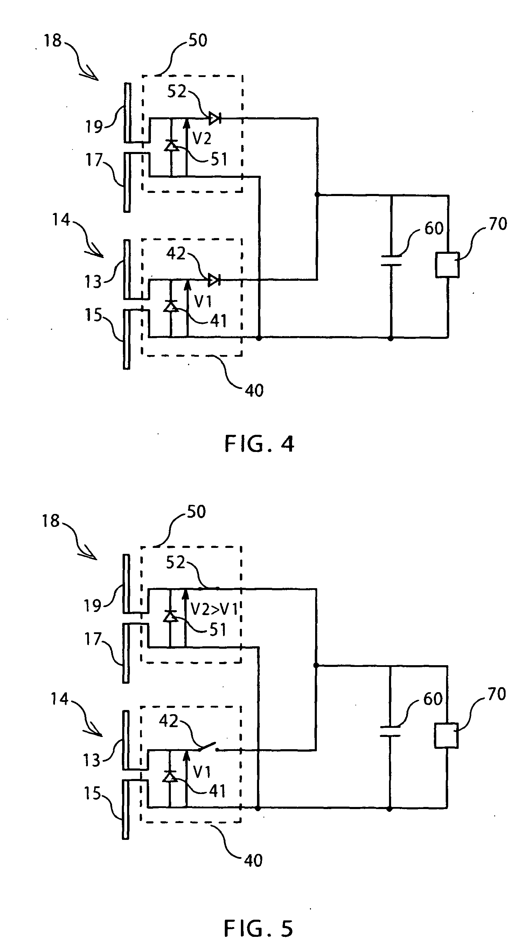

Chaque antenne est donc reliée à un étage du circuit intégré, par l'intermédiaire des plots de connexion, correspondant à un système de réception radiofréquence. Le circuit intégré connecté à deux antennes comporte donc deux systèmes de réception radiofréquence. Selon la figure 4, la tension induite par l'antenne 14 est redressée grâce à un circuit redresseur 40 comprenant une première diode 41 et une seconde diode 42. De même, la tension induite par l'antenne 18 est redressée grâce à un circuit redresseur 50 comprenant une première diode 51 et une seconde diode 52. Les circuits redresseurs 40 et 50 peuvent également utiliser des transistors montés en diodes ou tout autre composant assurant la même fonction.La tension de sortie redressée de l'antenne 14 est la tension positive et constante V1 alors que la tension de sortie redressée de l'antenne 18 est la tension V2. Le circuit intégré selon l'invention permet d'optimiser la capacité 60 nécessaire pour réguler la tension de sortie appliquée aux bornes de la charge 70 du circuit intégré de l'étiquette RFID, du fait que les deux circuits redresseur 40 et 50 sont montés en parallèle de sorte que les brins 15 et 17 des antennes 14 et 18 connectées respectivement aux plots de connexion 25 et 27 de la puce 12 sont reliés ensemble par une connexion ohmique. En effet, dans le cas d'un circuit intégré connecté à deux antennes selon l'état de la technique, chaque circuit redresseur nécessite une capacité qui peut représenter en surface environ les deux tiers de la surface du circuit- redresseur. Par conséquent, le circuit intégré selon l'invention bien que contenant deux circuits redresseurs n'utilise qu'une capacité et permet un gain de superficie représentant environ les deux tiers de la surface d'un circuit redresseur.

Selon le positionnement de l'étiquette RFID par rapport à l'antenne du lecteur, les valeurs de V1 et V2 varient de sorte que l'on obtient toujours 2 valeurs de tension positives non nulles telles que V1 > V2 ou V2 > V1. En supposant que la tension de sortie V2 de l'antenne 18 est supérieure à la tension de sortie V1 de l'antenne 14, le courant fourni par la tension V2 et passant par la diode 52 polarisée en direct (dans le sens passant) ne peut s'écouler que par la charge 70 dans la mesure où le circuit passant par la diode 42 est ouvert puisque cette dernière est dans ce cas polarisée en inverse (dans le sens bloqué). En référence à la figure 5, la diode 42 est donc équivalente à un commutateur ouvert provoquant l'ouverture du circuit passant par la diode 42.

Inversement, si V1 > V2, la diode 52 sera polarisée en inverse alors que la diode 42 sera polarisée en direct. Le courant fourni par la tension V1 ne pourra donc pas s'écouler par la diode 52 équivalente à un commutateur ouvert, mais seulement par la charge 70.

La tension induite dans l'antenne associée au circuit redresseur dans lequel la diode est polarisée en direct est ainsi la tension qui est appliquée à la charge 70 afin d'alimenter le circuit et d'échanger les informations issues du lecteur. Le circuit intégré selon l'invention permet ainsi de sélectionner la tension maximale entre la tension V1 issue de l'antenne 14 et la tension V2 issue de l'antenne 18, qui est donc la tension V2 dans l'exemple décrit dans la figure 5. La tension de sortie maximale sélectionnée est alors régulée grâce à la capacité 60 afin d'alimenter la charge 70 du circuit intégré de l'étiquette RFID 10. La tension issue de l'autre antenne n'est pas exploitée dans ce cas.

Les tensions induites dans chaque antenne générant le second signal correspondant à l'information modulée est traitée par deux circuits appelés détecteurs d'enveloppe, similaires aux circuits redresseurs 40 et 50. Cependant, les circuits détecteurs d'enveloppe possèdent des fréquences de coupure du signal de sortie supérieures aux fréquences de coupure des circuits redresseurs destinés à traiter le signal d'alimentation, de sorte que les tensions de sortie V1 et V2 ne sont pas constantes mais varient à une vitesse adaptée au débit du signal modulé. Pour le signal correspondant à l'information modulée, le circuit intégré selon l'invention présente l'avantage, lorsqu'une des tensions induites dans l'une des antennes est du bruit tel qu'un pic parasite, de ne prendre que le « bon » signal. Alors que dans le cas d'un circuit intégré qui additionne les tensions induites, le signal résultant contiendra une perturbation pouvant induire une erreur de communication.

Le circuit intégré selon l'invention pour le traitement du signal d'alimentation, comme pour le traitement du signal de l'information modulée, a l'avantage de procurer un gain de place étant donné qu'il ne nécessite qu'une seule capacité. De plus, même lorsqu'un des signaux capté par une des antennes est du bruit, le circuit intégré selon l'invention peut traiter le signal de l'information modulée sans erreur de communication tant que l'amplitude du bruit reste inférieure à l'amplitude du signal capté par l'autre antenne.

Les antennes utilisées peuvent être de tout type sans sortir du cadre de l'invention.

En outre, l'étiquette munie d'un circuit intégré selon l'invention permet un positionnement sur tout type de support tel que palette, carton, sans contraintes d'orientation. Le circuit intégré selon l'invention peut également être utilisé pour tout dispositif sans contact.

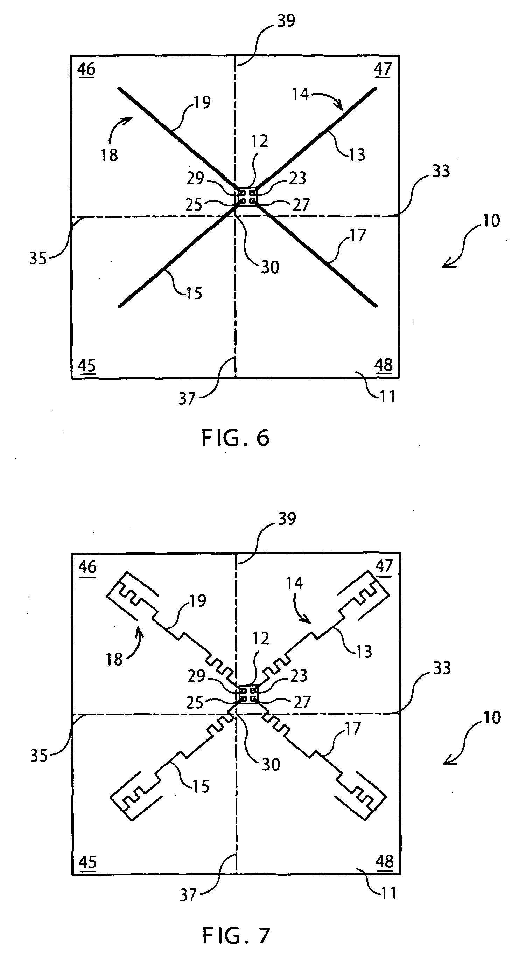

Le circuit intégré selon l'invention est particulièrement adapté aux étiquettes destinées à être apposées sur plusieurs faces d'un objet volumique tel qu'un carton. Une telle étiquette 10 est représentée sur la figure 6 et comprend deux axes 33-35 et 37-39 qui se croisent au point 30 situé de préférence au centre de l'étiquette. Les deux axes 33-35 et 37-39 sont de préférence perpendiculaires entre eux et sont de préférence des axes de symétrie de l'étiquette sans contact. Les deux axes 33-35 et 37-39 partagent l'étiquette sans contact en quatre zones 45, 46, 47 et 48. Les brins 13, 15, 17 et 19 des antennes sont disposés sur le support 11 de sorte qu'ils ne se superposent pas au point d'intersection 30 des deux axes 33-35 et 37-39 et qu'ils ne croisent pas au moins un des demi axes 33, 35, 37 ou 39. Selon notre exemple illustré il s'agit du demi axe 37 qui n'est croisé par aucun des brins d'antennes. De plus, le circuit intégré 12 est placé de façon à ne pas être à cheval sur un des axes 33-35, 37-39. Les axes 33-35 et 37-39 peuvent être matérialisés par des lignes de couleur sur l'une des faces de l'étiquette 10. L'étiquette comporte également une couche de protection sur le support d'antenne et servant de support à l'impression d'un logo ou autre et une couche de colle recouverte d'une feuille de papier siliconée amovible.

La figure 7 représente la même étiquette avec la même disposition des brins d'antennes par rapport aux axes que sur la figure précédente mais avec des brins d'antenne différents.

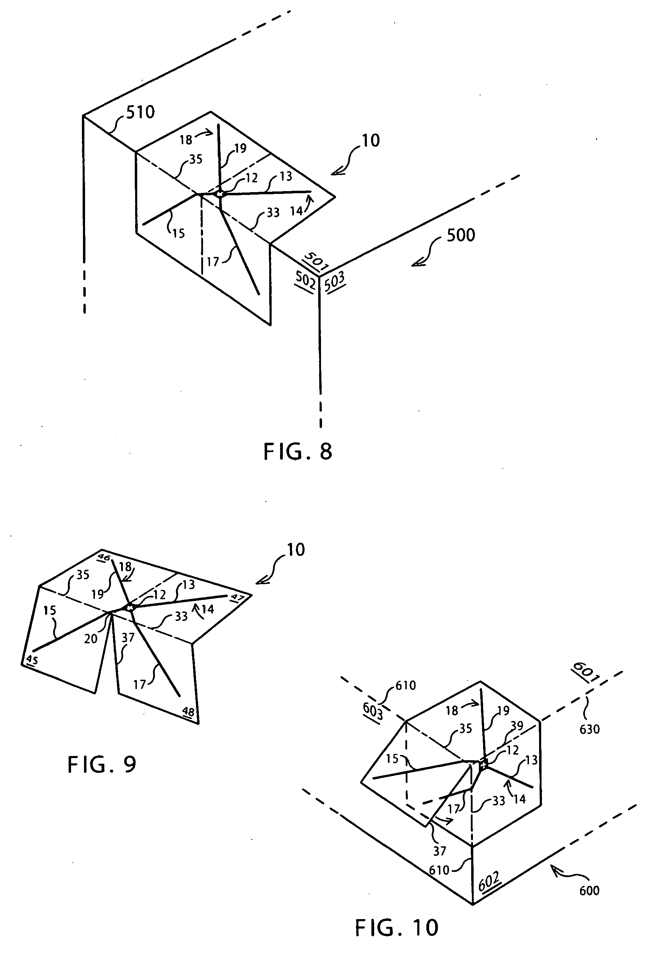

Selon la figure 8, l'étiquette sans contact 10 est collée sur les deux faces d'un objet volumique tel qu'un carton 500. Pour cela, l'étiquette peut être préalablement pliée le long de l'axe 33-35 de sorte que l'axe 33-35 se superpose à l'arête 510 du carton délimitant les deux faces 501 et 502 du carton. La partie de l'étiquette située sur la face 501 du carton 500 est composée des zones 46 et 47 qui comprennent la totalité du brin 13 de l'antenne 14 et la totalité du brin 19 de l'antenne 18 et une petite partie des brins 15 et 17. La partie de l'étiquette située sur la seconde face 502 du carton 500 est composée des zones 44 et 48 qui comprennent la majeure partie du brin 15 de l'antenne 14 et la majeure partie du brin 17 de l'antenne 18.

L'étiquette sans contact 10 peut également être apposée sur les trois faces d'un objet volumique tel qu'un carton. Dans ce cas, le positionnement de l'étiquette peut se faire de deux façons, soit une partie de l'étiquette est enlevée, soit une partie de l'étiquette est recouverte. Ces deux façons de faire sont illustrées respectivement sur les figures 9 et 10 puis 11 et 12.

Selon la figure 9, l'étiquette sans contact 10 est coupée le long du demi axe 37 jusqu'au point d'intersection 30 et est de préférence préalablement pliée le long de l'axe 33-35. L'étiquette 10 est ensuite positionnée sur le carton 600 de façon à ce que le point d'intersection 30 des deux axes de l'étiquette se superpose au coin du carton 600 tandis que le demi axe 35 se superpose à l'arête 610 du carton 600 et que le demi axe 39 se superpose à l'arête 630 du carton tel que représenté sur la figure 10. La partie 46 de l'étiquette située sur la face 601 du carton 600 comprend la majeure partie du brin 19 de l'antenne 14 et une petite partie du brin 15 de l'antenne 14. La partie 47 de l'étiquette située sur la seconde face 602 du carton 600 comprend la totalité du brin 13 de l'antenne 14 et une petite partie des brins 15, 17 et 19 ainsi que le circuit intégré 12. La partie 45 de l'étiquette située sur la troisième face 603 du carton 600 recouvre la partie 48 de l'étiquette 10. Ainsi, la partie de l'étiquette comprise sur la troisième face comprend la majeure partie du brin 15 de l'antenne 14 et la majeure partie du brin 17 de l'antenne 18.

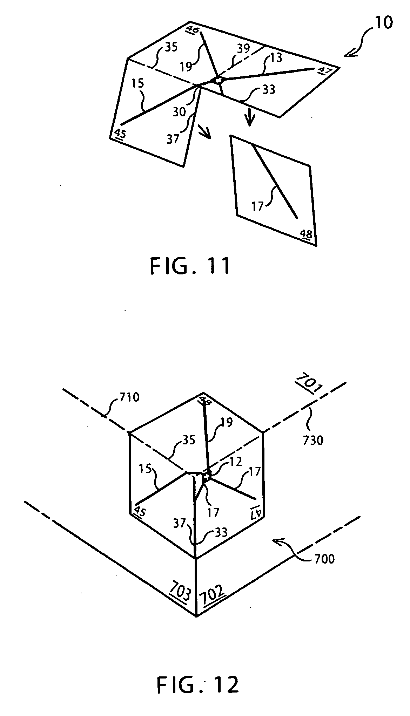

Pour placer l'étiquette sans contact sur les trois faces d'un objet volumique tel qu'un carton, une partie de l'étiquette peut également être enlevée. Dans ce cas, selon la figure 11, l'étiquette est coupée le long des demi axes 33 et 37 jusqu'au point d'intersection 30 et la zone 48 est détachée de l'étiquette 10. Ainsi, la majeure partie du brin 17 de l'antenne 18 est retirée. Les brins 15 et 17 étant reliés ensemble, le brin 15 sert de second brin à la fois à l'antenne 14 et l'antenne 18.

L'étiquette 10 est ensuite positionnée sur le carton 700 de façon à ce que le point d'intersection 30 des deux axes de l'étiquette se superpose au coin du carton 700 tandis que le demi axe 35 se superpose à l'arête 710 du carton 700 et que le demi axe 39 se superpose à l'arête 730 du carton tel que représenté sur la figure 12. La partie 46 de l'étiquette située sur la face 701 du carton 700 comprend la majeure partie du brin 19 de l'antenne 14 et une petite partie du brin 15 de l'antenne 14. La partie de l'étiquette située sur la seconde face 702 du carton 700 est composée de la zone 47 et comprend la totalité du brin 13 de l'antenne 14 et une petite partie des brins 15, 17 et 19 ainsi que le circuit intégré 12. La partie de l'étiquette située sur la troisième face 703 du carton 700 est composée de la zone 45 et comprend la majeure partie du brin 15 de l'antenne 14. Les deux brins 15 et 17 des antennes respectives 14 et 18 étant reliés ensemble, l'antenne 14 est composée des brins 13 et 15 et l'antenne 18 est composée des brins 19 et 15. Selon l'incidence du champ émis par le lecteur, c'est l'antenne 14 composée des brins 13 et 15 ou bien l'antenne 18 composée des brins 19 et 15 qui alimente le circuit intégré 12.

De façon générale, les deux axes 33-35 et 37-39 servent d'axe le long desquels l'étiquette peut être pliée, et le demi axe 37 peut être coupé sans que le fonctionnement de l'étiquette en soit perturbé. Afin de faciliter la mise en place de l'étiquette sur les deux faces ou les trois faces d'un objet volumique tel qu'un carton, les demi axes 33, 35, 37 et 39 qui sont soit des axes de pliure, soit des axes à couper, peuvent être préformés, c'est-à-dire que l'étiquette peut avoir été préalablement pliée le long des axes lors de la fabrication.

Lorsque l'étiquette selon l'invention est disposée sur deux ou trois faces d'un objet volumique, le lecteur échange des données avec au moins une des deux antennes. En effet, qu'une des deux antenne soit masquée ou pas, une des deux aura un rayonnement privilégié par rapport à l'autre vis-à-vis du lecteur et c'est celle là qui alimentera le circuit intégré étant donné que seule la tension maximale entre les deux tensions des signaux entrant des antennes est sélectionné. Donc selon l'incidence du champ émis par le lecteur, le circuit intégré est alimentée par l'antenne 14 ou par l'antenne 18.

## Revendications

1. Circuit intégré (12) pour dispositif sans contact radiofréquence connecté à une première antenne (14) et à une seconde antenne (18) étant destinées à recevoir un signal radiofréquence en provenance d'un lecteur,
**caractérisé en ce que** ledit circuit intégré (12) comprend un premier circuit redresseur (40) et un second circuit redresseur (50) pour redresser chaque signal radiofréquence reçu respectivement de ladite première antenne (14) et de ladite seconde antenne (18), de façon à produire deux tensions de sortie positives V1 et V2, lesdits circuits redresseur (40 et 50) étant montés en parallèle de façon à sélectionner une valeur de tension de sortie qui correspond à la valeur de tension maximale entre V1 et V2.

2. Circuit intégré (12) selon la revendication 1, dans lequel la tension de sortie maximale sélectionnée est régulée grâce à une capacité (60).

3. Circuit intégré (12) selon l'une des revendications 1 ou 2 dans lequel la tension régulée en sortie de capacité (60) est appliquée à la charge (70) pour l'alimentation du circuit et pour la transmission des informations.

4. Circuit intégré (12) selon l'une des revendications 1 à 3 comportant une zone mémoire contenant par exemple les informations nécessaires à la traçabilité d'un objet ou à l'identification d'une personne.

5. Circuit intégré (12) selon la revendication 4 dans lequel lesdites informations peuvent être lues à partir d'un lecteur par échange d'ondes électromagnétiques à ultra haute fréquence (UHF).

6. Dispositif sans contact radiofréquence comprenant un circuit intégré (12) selon l'une des revendications 1 à 5.

7. Dispositif sans contact radiofréquence selon la revendication 6 dans lequel les antennes (14 et 18) sont des antennes du type antennes dipôle.

8. Dispositif sans contact radiofréquence selon l'une des revendications 6 ou 7 dans lequel les antennes sont imprimés sur un support (11).

9. Dispositif sans contact radiofréquence selon l'une des revendications 6 à 8, dans lequel ledit support (11) est en papier.

10. Dispositif selon l'une des revendications 6 à 9 qui est une étiquette d'identification radiofréquence (RFID) ou étiquette sans contact.

11. Etiquette sans contact (10) selon la revendication 10 dimensionnée pour être apposée sur une ou plusieurs faces d'un objet volumique, chaque partie de l'étiquette située sur l'une des faces de l'objet contenant en tout ou partie au moins un brin de l'une desdites antennes (14 et 18) de façon à participer à l'échange de données avec le lecteur quelle que soit l'orientation de l'étiquette par rapport au lecteur.

12. Etiquette sans contact selon la revendication 11, comprenant deux axes 33-35 et 37-39 le long desquels l'étiquette peut être pliée, le demi axe 37 pouvant être coupé sans que le fonctionnement de l'étiquette en soit perturbé.

## Claims

1. An integrated circuit (12) for a contactless radiofrequency device connected to a first antenna (14) and to a second antenna (18) being designed to receive a radiofrequency signal coming from the reader,
**characterized in that** said integrated circuit (12) includes a first rectifier circuit (40) and a second rectifier circuit (50) to rectify each radiofrequency signal received from said first antenna (14) and from said second antenna (18), respectively, so as to produce two positive output voltages V1 and V2, said rectifier circuits (40 and 50) being mounted in parallel in order to select an output voltage value that corresponds to the maximum voltage value between V1 and V2.

2. The integrated circuit (12) according to claim 1, in which the maximum output voltage selected is regulated by means of a capacitor (60).

3. The integrated circuit (12) according to any of claims 1 or 2 in which the regulated voltage output from the capacitor (60) is applied to the load (70) for powering the circuit and for transmitting information.

4. The integrated circuit (12) according to any of claims 1 to 3 featuring a memory zone containing, for example, the information required for the traceability of an object or for identifying a person.

5. The integrated circuit (12) according to claim 4 in which said information can be read from a reader by exchange of ultra high frequency (UHF) electromagnetic waves.

6. The contactless radiofrequency device featuring an integrated circuit (12) according to any of claims 1 to 5.

7. The contactless radiofrequency device according to claim 6 in which the antennas (14 and 18) are dipole type antennas.

8. The contactless radiofrequency device according to any of claims 6 or 7 in which the antennas are printed on a support (11).

9. The contactless radiofrequency device according to any of claims 6 to 8, in which said support (11) is made of paper.

10. The device according to any of claims 6 to 9 which is a radiofrequency identification label (RFID) or contactless label.

11. The contactless label (10) according to claim 10 sized to be affixed on one or more sides of a tridimensional object, each part of the label located on one of the sides of the object containing entirely or in part at least one wire of one of said antennas (14 and 18) so that any side can take part in the exchange of data with the reader whatever the orientation of the label with respect to the reader.

12. The contactless label according to claim 11, featuring two axes 33-35 and 37-39 along which the label can be folded, with the semi-axis 37 being possibly cut without disturbing the operation of the label.

## Patentansprüche

1. Integrierte Schaltung (12) für eine Vorrichtung ohne Hochfrequenzkontakt, die mit einer ersten Antenne (14) und mit einer zweiten Antenne (18) verbunden ist, die dazu bestimmt sind, ein von einem Lesegerät kommendes Hochfrequenzsignal zu empfangen,
**dadurch gekennzeichnet, dass** die integrierte Schaltung (12) eine erste Gleichrichterschaltung (40) und eine zweite Gleichrichterschaltung (50) enthält, um jedes von der ersten Antenne (14) bzw. von der zweiten Antenne (18) empfangene Hochfrequenzsignal gleichzurichten, um zwei positive Ausgangsspannungen V1 und V2 zu erzeugen, wobei die Gleichrichterschaltungen (40 und 50) parallelgeschaltet sind, um einen Ausgangsspannungswert zu wählen, der dem maximalen Spannungswert zwischen V1 und V2 entspricht.

2. Integrierte Schaltung (12) nach Anspruch 1, bei der die ausgewählte maximale Ausgangsspannung mit Hilfe eines Kondensators (60) geregelt wird.

3. Integrierte Schaltung (12) nach einem der Ansprüche 1 oder 2, bei der die geregelte Spannung am Kondensatorausgang (60) zur Speisung der Schaltung und zur Übertragung der Informationen an die Last (70) angelegt wird.

4. Integrierte Schaltung (12) nach einem der Ansprüche 1 bis 3, die eine Speicherzone aufweist, die zum Beispiel die für die Rückverfolgbarkeit eines Objekts oder die Identifizierung einer Person notwendigen Informationen enthält.

5. Integrierte Schaltung (12) nach Anspruch 4, bei der die Informationen ausgehend von einem Lesegerät durch Austausch von elektromagnetischen Ultrahochfrequenzwellen (UHF) gelesen werden können.

6. Vorrichtung ohne Hochfrequenzkontakt, die eine integrierte Schaltung (12) nach einem der Ansprüche 1 bis 5 enthält.

7. Vorrichtung ohne Hochfrequenzkontakt nach Anspruch 6, bei der die Antennen (14 und 18) Antennen von der Art Dipol-Antennen sind.

8. Vorrichtung ohne Hochfrequenzkontakt nach einem der Ansprüche 6 oder 7, bei der die Antennen auf einen Träger (11) gedruckt sind.

9. Vorrichtung ohne Hochfrequenzkontakt nach einem der Ansprüche 6 bis 8, bei der der Träger (11) aus Papier ist.

10. Vorrichtung nach einem der Ansprüche 6 bis 9, die ein Hochfrequenz-Identifikationsetikett (RFID) oder ein kontaktloses Etikett ist.

11. Kontaktloses Etikett (10) nach Anspruch 10, das bemessen ist, um auf eine oder mehrere Seiten eines Volumenobjekts aufgebracht zu werden, wobei jeder Bereich des Etiketts, der sich auf einer der Seiten des Objekts befindet, ganz oder teilweise mindestens einen Einzeldraht einer der Antennen (14 und 18) enthält, um am Datenaustausch mit dem Lesegerät teilzunehmen, unabhangig von der Ausrichtung des Etiketts bezüglich des Lesegeräts.

12. Kontaktloses Etikett nach Anspruch 11, das zwei Achsen 33-35 und 37-39 enthält, entlang derer das Etikett gefaltet werden kann, wobei die Halbachse 37 geschnitten werden kann, ohne den Betrieb des Etiketts zu stören.
